# EUROPÄISCHE PATENTSCHRIFT

(11) **EP 1 076 782 B1**
(45) Veröffentlichungstag und Bekanntmachung des Hinweises auf die Patenterteilung: **30.07.2003**
(21) Anmeldenummer: 99924895.8
(22) Anmeldetag: 06.05.1999
(51) Int. Cl.: F16F 9/53

(54) **SCHWINGUNGSDÄMPFER AUF BASIS ELEKTRORHEOLOGISCHER UND/ODER MAGNETORHEOLOGISCHER FLÜSSIGKEITEN**
VIBRATION DAMPER ON THE BASIS OF ELECTRORHEOLOGICAL AND/OR MAGNETORHEOLOGICAL FLUIDS
AMORTISSEUR DE VIBRATIONS A BASE DE LIQUIDES ELECTRORHEOLOGIQUES ET/OU MAGNETORHEOLOGIQUES

(30) Priorität: 08.05.1998 DE 19820570
(43) Veröffentlichungstag der Anmeldung: 21.02.2001
(73) Patentinhaber: CARL SCHENCK AG, 64293 Darmstadt (DE)
(72) Erfinder: ROSENFELDT, Horst, D-64846 Gro -Zimmern (DE); SCHERK, Horst, D-64273 Ober-Ramstadt (DE); ADAMS, Dorothea, D-64572 Büttelborn (DE); WENDT, Eckhardt, D-51373 Leverkusen (DE); BÜSING, Klaus, D-51065 Köln (DE)
(74) Vertreter: Behrens, Helmut, Dipl.-Ing.
(86) Internationale Anmeldenummer: EP9903123
(87) Internationale Veröffentlichungsnummer: WO99058873

(56) Entgegenhaltungen:
- EP-A- 0 183 039
- EP-A- 0 261 427
- DE-A- 3 631 107
- DE-A- 3 709 447
- PATENT ABSTRACTS OF JAPAN vol. 009, no. 268 (M-424), 25. Oktober 1985 (1985-10-25) & JP 60 113711 A (HONDA GIKEN KOGYO KK), 20. Juni 1985 (1985-06-20)

## Beschreibung

Der Einsatz von Schwingungsdämpfern ist in einer Vielzahl von technologischen Gebieten z. B. dem Maschinen- und Fahrzeugbau bekannt. In Kraftfahrzeugen werden beispielsweise Stoßdämpfer zur Erhöhung der Fahrsicherheit und des Komforts eingesetzt.

Der prinzipielle Aufbau von Stoßdämpfern auf Basis elektrorheologischer Flüssigkeiten ist unter anderem aus der Druckschrift "Technischer Einsatz neuer Aktoren", Expert-Verlag, 1995, Seite 57 und 58 bekannt. Bei diesen Stoßdämpfern sind in einem zylindrischen Gehäuse zwei Druckmittelräume durch einen Kolben getrennt, wobei beispielsweise der Kolben Fluiddurchlaßöffnungen besitzt, durch die die elektrorheologische Flüssigkeit strömt. Die Dämpfkraft des Schwingungsdämpfers in Zug und Druckhub ist dann durch Veränderung der rheologischen Eigenschaften des Fluids variabel einstellbar.

In der Regel handelt es sich bei elektrorheologischen Flüssigkeiten um Suspensionen, d.h. in einem Trägermedium suspendierte Festpartikel, die über das elektrische bzw. magnetische Feld polarisierbar sind.

Bekanntlich kann durch Einwirken eines elektrischen Feldes bzw. magnetischen Feldes die Viskosität von elektrorheologischen bzw. magnetorheologischen Flüssigkeiten in weiten Bereichen sehr schnell und reversibel eingestellt werden. Bei elektrorheologischen Flüssigkeiten wird hierfür an Elektrodenanordnungen eine elektrische Steuerspannung zur Erzeugung eines elektrischen Feldes gelegt. Die Wechselwirkung zwischen der Elektrodenanordnung und der elektrorheologischen Flüssigkeit kann abhängig von der Art der Flüssigkeitsdeformation nach drei grundsätzlichen Moden unterschieden werden, dem Shear-Mode (Elektroden verschieben sich relativ zueinander in parallelen Ebenen), dem Flow-Mode (Elektroden sind fest angeordnet, die Flüssigkeit strömt zwischen den Elektroden hindurch) und dem Squeeze-Mode (Elektroden verändern ihren Abstand zueinander). Diese Moden können auch in Kombination auftreten. Näheres hierzu findet sich in dem Buch "Technischer Einsatz neuer Aktoren", Expert-Verlag, 1995, Rapitel 2.3.1 und Bild 3.1.

In Dämpfern nach dem Flow-Mode Prinzip fließt die elektrorheologische Flüssigkeit aufgrund einer Kolbenbewegung durch einen separaten, die Druckmittelräume verbindenen Strömungskanal (EP-0581476) der eine Elektrodenanordnung besitzt. Bei einer anderen Ausführungsform beseht der Kolben selbst aus einer Anordnung konzentrischer Elektroden, die abwechselnd gepolt sind. In beiden Fällen kann durch ein elektrisches Feld der Strömungswiderstand der elektrorheologischen Flüssigkeit und dadurch das Dämpferverhalten gesteuert werden.

Aus der DE 4433056 ist ein Schwingungsdämpfer bekannt, der mit einer magnetorheologischen Flüssigkeit arbeitet. Bei diesem Dämpfer bewegt sich innerhalb eines Zylinders ein Kolben, der den Zylinder in zwei Druckmittelräume unterteilt, wobei die Druckmittelräume über zwischen der Kolbenumfangsfläche und der Innenwand des Zylinders gebildeten Strömungskanals verbindbar sind. Im Bereich der Strömungskanäle wird ein magnetisches Feld erzeugt, welches auf die magnetorheologische Flüssigkeit zur Veränderung der Dämfungseigenschaften des Dämpfers einwirkt (Shear-Mode).

Aus der EP 0401009 A1 ist ein Schwingungsdämpfer bekannt, der mit einer elektrorheologischen Flüssigkeit arbeitet. Hierbei werden die die Druckmittelräume verbindenden Strömungskanäle durch im Kolben angeordnete Fluiddurchlaßöffnungen (Flow-Mode) oder durch einen zwischen Zylindergehäuse und Kolbenumfangsfläche befindlichen Ringspalt gebildet (Shear-Mode). Im Bereich der Strömungskanäle wird dann ein regelbares elektrischen Feld erzeugt.

Aus der DE-A-3 631 107 ist ein Schwingungsdämpfer bekannt, bei dem die Elektroden paare im Arbeitskolben im Bereich seiner die Arbeits kammern verbindenden Durchtrittskanäle angeordnet sind.

Aufgabe der vorliegenden Erfindung ist es einen Schwingungsdämpfer auf Basis elektrorheologischer und/oder magnetorheologischer Flüssigkeiten weiterzubilden, der geringe bauliche Abmessungen besitzt, eine niedrige Grunddämpfung aufweist und mit dem hohe Dämpferkräfte erreicht werden können, die bei Druck und Zughub geschwindigkeitsabhängig variabel steuerbar sind.

Diese Aufgabe wird durch die im Patentanspruch 1 angegebenen Merkmale gelöst.

Durch eine Anordnung mindestens eines zusätzlichen Bypass-Kanals wird eine Volumenaufteilung des von der einen Druckmittelkammer zur anderen Druckmittelkammer strömenden Fluids erreicht, wobei der durch den Strömungskanal strömende Anteil über ein elektrisches und/oder magnetisches Feld beaufschlagbar ist. Der Strömungswiderstand kann erheblich verringert werden, ohne daß der eigentliche durch den Strömungskanal gebildete Ventilspalt größer ausgebildet werden muß.

Eine Weiterbildung des Erfindungsgedankens sieht vor, daß die Ein- und Auslaßbohrungen des Bypass-Kanals jeweils eine unterschiedliche geometrische Formgebung besitzen. Dadurch wird in Zug- und Druckhubrichtung eine unterschiedliche geschwindigkeitsabhängige Dämpfkraft erreicht.
- Fig. 1a:: zeigt einen Längsschnitt durch einen Kolben mit Sitzventilen;
- Fig. 1b:: zeigt einen Schnitt längs der Linie B-B in Fig. 1a;
- Fig. 2a:: zeigt einen Längsschnitt durch einen Kolben eines Stoßdämpfers, der an den Bypass-Kanälen für Zug- und Druckhub unterschiedliche Anströmkanten aufweist;
- Fig. 2b:: zeigt einen Schnitt längs der Linie B-B in Fig. 2a;
- Fig. 3a:: zeigt einen Längsschnitt durch einen drehbar gelagerten Kolben eines Stoßdämpfers;
- Fig. 3b:: zeigt einen Schnitt längs der Linie B-B in Fig. 3a;
- Fig. 4a:: zeigt einen Längsschnitt durch eine weitere Ausführungsform eines Kolbens eines Stoßdämpfers;
- Fig. 4b:: zeigt einen Schnitt längs der Linie B-B in Fig. 4a.

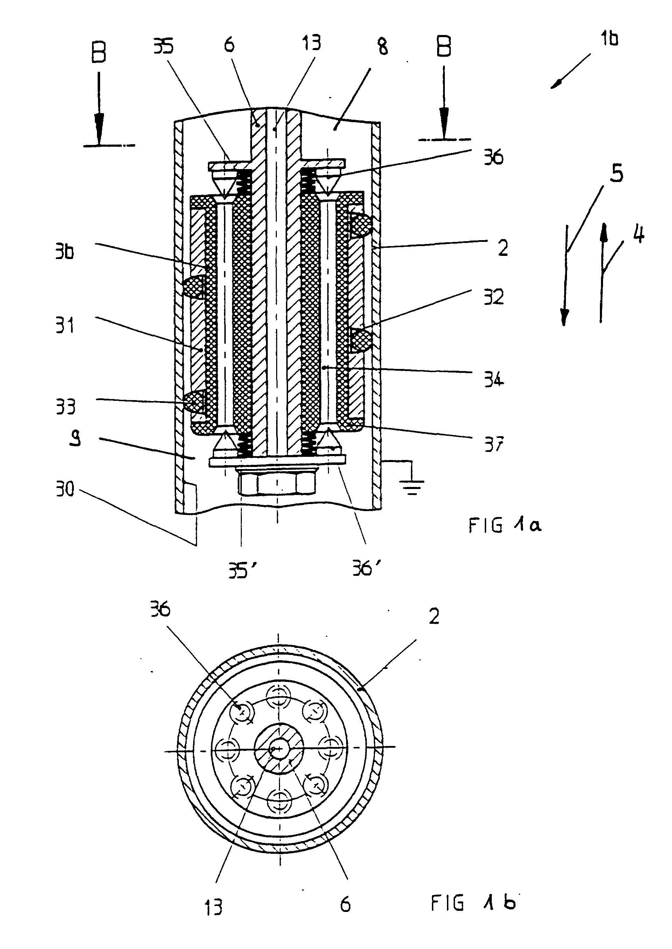

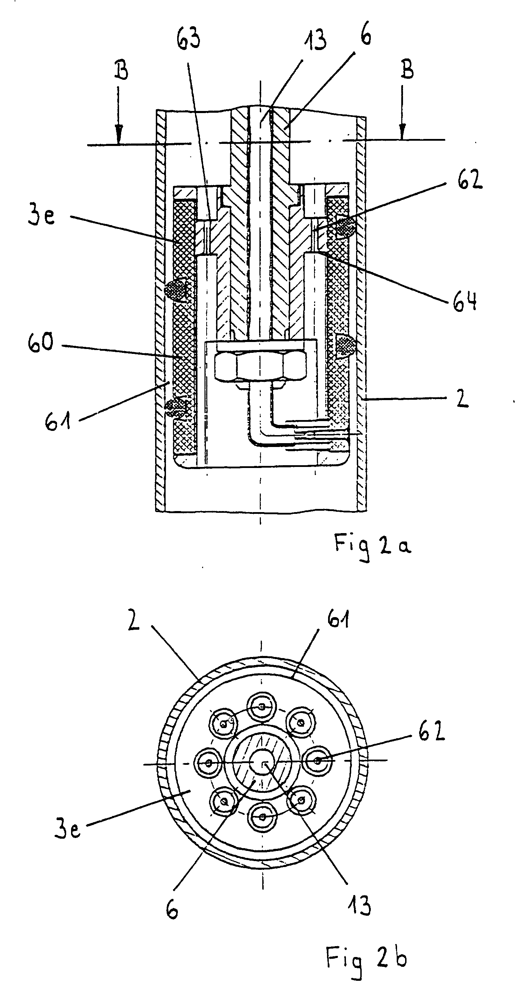

Der im Längsschnitt in Fig. 1a dargestellte Stoßdämpfer 1b besteht aus einem Zylindergehäuse 2 mit einem axial verschiebbaren Kolben 3b. Die axiale Verschiebung des Kolbens 3b ist durch die Pfeile 4, 5 dargestellt, die den Zug- und Druckhub kennzeichnen. Der Kolben 3b ist mit einer Kolbenstange 6 verbunden, die über eine Durchführung abgedichtet aus dem Gehäuse 2 herausgeführt ist. Der Kolben 3b unterteilt das Gehäuse 2 in zwei Druckmittelräume 8 und 9, die in diesem Ausführungsbeispiel mit elektrorheologischer Flüssigkeit als Druckmittel gefüllt sind. Ferner ist in dem Gehäuse 2 eine Gasdruckkammer vorgesehen, die u. a. dem Ausgleich des Kolbenstangenvolumens und thermischer Volumenschwankungen der elektrorheologischen Flüssigkeit dient.

Bei dem in Fig. 1a im Längsschnitt dargestellten Kolben 3b eines Stoßdämpfers 1b wird ein wendelförmiger ansteuerbarer Strömungskanal zwischen Kolben 3b und der inneren Gehäusemantelfläche 30 gebildet. Hierfür ist auf der Kolbenmantelfläche eine zylindrische Hülse 31 angeordnet, in die eine wendeiförmige, in axialer Richtung sich erstreckende Nut 32 eingebracht ist und in die eine aus einem Isolationsmaterial bestehende, im Querschnitt kreisförmige Wendel 33 eingelegt ist. Die Wendel 33 liegt dichtend an der inneren Gehäusemantelfläche 30 an. Das Zylindergehäuse 2 ist geerdet, die Hülse 31 ist mit der Hochspannungsleitung 13 verbunden, so daß der wendelförmige Strömungskanal mit einem elektrischen Feld beaufschlagbar ist. Das Dämpfungsverhalten des anhand von Fig. 1a, 1b, beschriebenen Stoßdämpfers kann nun über nicht dargestellte Sensoren durch Steuerung des zwischen den Elektroden erzeugten elektrischen Feldes geschwindigkeitsabhängig und richtungsabhängig für Zug- und Druckhub gesteuert werden. Der Kolben 3b ist ferner mit acht Durchgangsbohrungen 34 versehen, die als Bypass-Kanäle wirken, wobei an deren oberen und unteren Ende jeweils ein über eine Feder 35 vorgespanntes Sitzventil 36 angeordnet ist. Der Ventilsitz 37 ist kegelförmig ausgebildet, wobei der Kegelwinkel der oberen bzw. der unteren Ventilsitze 37 unterschiedlich groß ausgebildet sein kann. Die den oberen Sitzventilen 36 zugeordneten Federn 35 können gegenüber den den unteren Sitzventilen 36' zugeordneten Federn 35' unterschiedliche Federsteifigkeiten und Vorspannungen aufweisen. In Abhängigkeit von der Kolbengeschwindigkeit und der Richtung der Kolbenbewegung (Zug-/Druckhub) werden die Bypass-Kanäle über die Sitzventile 36, 36' geschlossen, so daß der Strömungswiderstand in Abhängigkeit von der Kolbengeschwindigkeit und der Durchströmungsrichtung unterschiedlich ist. Die Bypass-Kanäle unterscheiden sich von den Strömungskanälen dadurch, daß kein elektrisches Feld erzeugt wird, so daß ein steuerbarer Stoßdämpfer erreicht wird, der eine geringe Basisdämpfung besitzt.

In Fig. 2a ist im Längsschnitt ein weiteres Ausführungsbeispiel eines Kolbens 3e eines Stoßdämpfers 1e dargestellt. Der Kolben 3e besteht aus einem zylindrischen Grundkörper 60. Zwischen Kolben 3e und Gehäuse 2 wird ein wendelförmiger über ein elektrisches Feld beaufschlagbarer Strömungskanal gebildet. Dies ist zu Fig. 1a, 1b näher beschrieben. Als Bypass-Kanäle 62 sind in dem Kolben 3e acht axial sich erstreckende Durchgangsbohrungen vorgesehen. Hierbei werden die oberen und unteren Bohrungseingänge 63, 64 unterschiedlich geometrisch gestaltet. Die oberen Bohrungseingänge 63 werden mit einer möglichst scharfen Kante versehen, um einen harten Übergang zu erhalten, der die Fluidströmung beim Durchströmen der Bypass-Kanäle 62 beim Zug-Hub nicht folgen kann, so daß sie sich an dem Querschnittsübergang ablöst. Dabei kommt es zu einer Strahleinschnürung auf einen minimalen Querschnitt mit anschließender Wiederaufweitung des Strahls.

Die unteren Bohrungseingänge 64 werden hingegen mit einem Radius versehen, so daß beim entgegengesetzten Durchströmen der Bypass-Kanäle 62 (Druck-Hub) sich die Fluidströmung nicht ablöst und es auch nicht zu einer Strahleinschnürung kommt. Die unterschiedliche Gestaltung der Bohrungseingänge 63, 64 der Bypass-Kanäle 62 auf Zug- und Druckhubseite im Kolben 3e bewirken ein asymmetrisches Dämpfkraftverhältnis in Zug- und Druckrichtung.

In Fig. 3a ist im Längsschnitt ein weiteres Ausführungsbeispiel eines Kolbens 3f eines Stoßdämpfers 1f dargestellt. Der Kolben 3f besteht aus einem zylindrischen Grundkörper 70. Zwischen Kolben 3f und Gehäuse 2 wird ein wendelförmiger, über ein elektrisches Feld beaufschlagbarer Strömungskanal 71 gebildet. Dies ist zu den Figuren 1a, 1b näher erläutert. Der Grundkörper 70 weist mittig eine zylindrische Durchgangsbohrung zur Aufnahme der Kolbenstange 6 auf. Des weiteren sind in den Grundkörper 70 acht axial sich erstreckende Bypass-Kanäle 72 eingebracht. Der Grundkörper 70 besitzt an seinem oberen und unteren Endbereich 73, 73' kreisförmige Ausnehmungen, in die jeweils ein scheibenförmiges Element 74, 74', das mit der Kolbenstange drehfest verbunden ist, eingesetzt ist.

In die scheibenförmigen Elemente 74, 74' sind acht Durchgangsbohrungen 75 eingebracht, wobei die geometrische Formgebung und Anordnung der Bohrungen 75 der Formgebung und Anordnung der Bypass-Kanäle 72 entspricht. Die scheibenförmigen Elemente 74, 74' sind jeweils derart in die Ausnehmungen eingesetzt, daß die Bohrungen 75 und die Bypass-Kanäle 72 jeweils übereinander liegen.

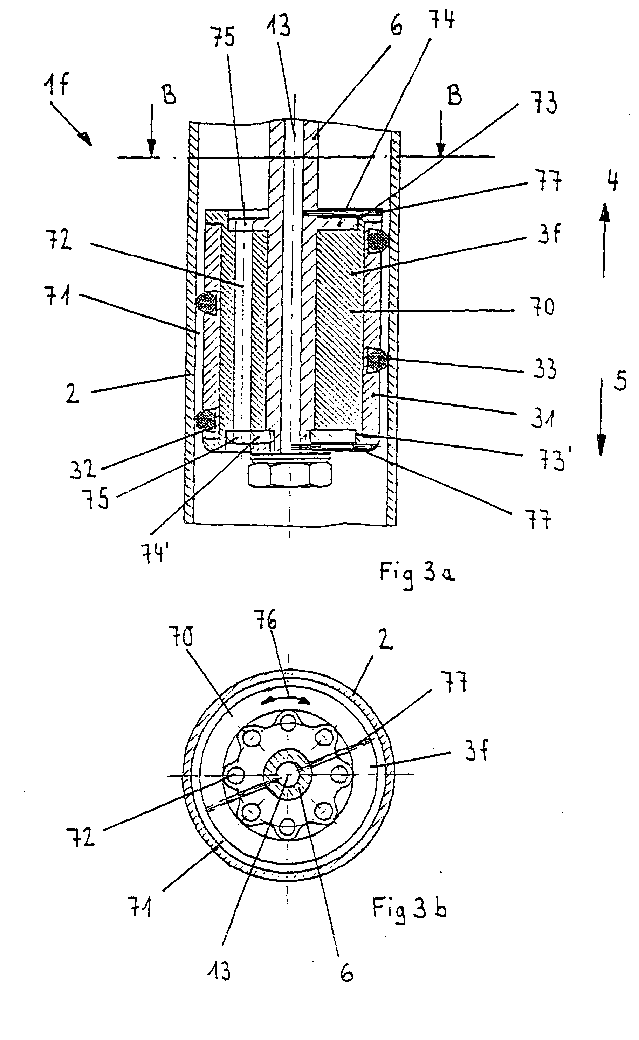

Die Kolbenstange 6 und der Kolben 3f sind gegeneinander verdrehbar angeordnet (dargestellt durch Pfeil 76 in Fig. 3b) und sind über eine obere und untere Drehfeder 77 gegeneinander vorgespannt.

Eine Längsbewegung in Richtung des Pfeils führt in Abhängigkeit von der Kolbengeschwindigkeit zu einer Verdrehung des Kolbens 3f gegenüber den an der Kolbenstange 6 drehfest angeordneten scheibenförmigen Elementen 74, 74'. Hierdurch werden die Einlaßbohrungen der Bypass-Kanäle 72 verschlossen, so daß der Strömungswiderstand größer wird (Drosselwirkung). In Abhängigkeit von der Federsteifigkeit der eingesetzten Drehfeder 77 auf der Zug- und Druckhubseite kann die Drosselwirkung der Bypass-Kanäle 72 für die Zug- und Druckhubseite unterschiedlich eingestellt werden.

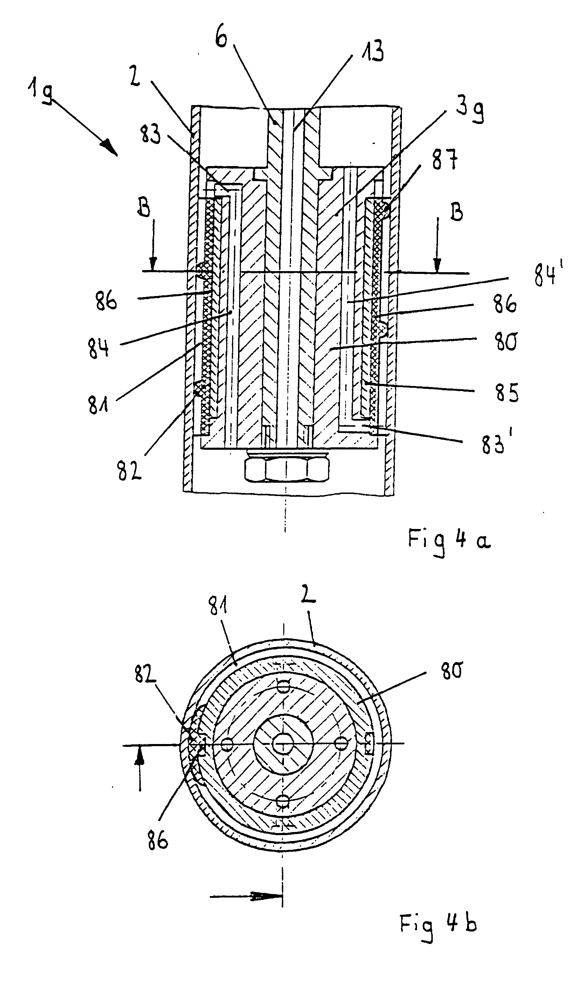

In Fig. 4a ist im Längsschnitt ein weiteres Ausführungsbeispiel eines Kolbens 3g eines Stoßdämpfers 1g dargestellt. Der Kolben 3g besteht aus einem zylindrischen Grundkörper 80, der eine mittige Durchgangsbohrung zur drehfesten Aufnahme der Kolbenstange 6 aufweist. Zwischen Kolben 3g und Zylindergehäuse 2 wird ein wendelförmiger Strömungskanal 81 gebildet, der über ein elektrisches Feld beaufschlagbar ist. Hierzu ist auf der Mantelfläche des Kolbens 3g eine aus einem elektrisch leitfähigen Material bestehende Hülse 85 fixiert, die mit einer Hochspannungsleitung 13 verbunden ist. Auf der Hülse 85 ist eine axial verschiebbar gelagerte Hülse 82 angeordnet. Die Hülse 82 ist aus einem Isolationsmaterial und besteht aus vier Längsstegen 86 sowie eine die Längsstege 86 verbindende in Längsrichtung sich erstreckende Wendel 87. Die Wendel liegt flüssigkeitsdicht am Zylindergehäuse 2 an.

In dem Grundkörper 80 sind zwei diametral angeordnete, auf gegenüberliegenden Endbereichen von der des Kolbens 3g aufweisenden Mantelfläche ausgehende radiale Bohrungen 83 vorgesehen, die jeweils in eine axial sich erstreckende Bohrung 84, 84' münden. Die Bohrungen 84, 84' treten stirnseitig aus dem oberen bzw. unteren Endbereich des Kolbens 3g aus. Diese durch die Bohrungen 83, 84, 83', 84' definierten Bypass-Kanäle werden bei einer Längsbewegung des Kolbens 3g in Abhängigkeit von der Kolbengeschwindigkeit über eine Verschiebung der Hülse 82 verschlossen, so daß der Strömungswiderstand größer wird. Durch unterschiedliche Formgebung der Bypass-Kanäle 83, 84 und 83', 84' kann die Drosselwirkung für die Zug- und Druckhubseite unterschiedlich eingestellt werden.

Anstelle der Verwendung einer elektrorheologischen Flüssigkeit kann auch eine magnetorheologische Flüssigkeit oder ein Gemisch beider Flüssigkeiten eingesetzt werden. Bei der Verwendung von magnetorheologischen Flüssigkeiten werden anstelle der Kondensatorplattenelemente elektrisch ansteuerbare Spulenanordnungen vorgesehen.

## Patentansprüche

1. Schwingungsdämpfer auf Basis elektrorheologischer und/oder magnetorheologischer Flüssigkeiten mit einem Zylindergehäuse, einem das Zylindergehäuse in zwei Druckmittelräume unterteilenden, mit einer Kolbenstange in Verbindung stehenden, axial verschiebbaren Kolben, wobei die Druckmittelräume mit einer elektrorheologischen und/oder magnetorheologischen Flüssigkeit gefüllt sind, und wobei die Druckmittelräume verbindende Fluiddurchlasskanäle angeordnet sind, wobei diese in einen Strömungskanal und mindestens einen Bypass-Kanal aufgeteilt sind, und wobei ein Fluiddurchlasskanal über ein elektrisches und/oder ein magnetisches Feld beaufschlagbar ist, **dadurch gekennzeichnet, daß** der Strömungskanal als axial sich erstreckender wendelförmiger Spalt zwischen dem Zylindergehäuse (2) und dem Kolben (3b, 3e, 3f, 3g) angeordnet und elektrisch ansteuerbar ausgebildet ist und der mindestens eine Bypass-Kanal (34, 62, 72, 83, 83', 84, 84') einen in Abhängigkeit von der Kolbengeschwindigkeit fest vorgegebenen Strömungswiderstand aufweist.

2. Schwingungsdämpfer auf Basis elektrorheologischer und/oder magnetorheologischer Flüssigkeiten nach Patentanspruch 1, **dadurch gekennzeichnete daß** der mindestens eine Bypass-Kanal (34, 62, 83, 83') an seiner Fluidein- bzw. Fluidauslaßöffnung in Zug- und Druckhubrichtung jeweils eine unterschiedliche geometrische Formgebung aufweist.

3. Schwingungsdämpfer auf Basis elektrorheologischer und/oder magnetorheologischer Flüssigkeiten nach Patentanspruch 1, **dadurch gekennzeichnet, daß** die Fluidein- bzw. Fluidauslaßöffnung des mindestens einen Bypass-Kanales (34) jeweils über Sitzventile (36, 36') in Abhängigkeit von der Kolbengeschwindigkeit verschließbar ist.

4. Schwingungsdämpfer auf Basis elektrorheologischer und/oder magnetorheologischer Flüssigkeiten nach Patentanspruch 1, **dadurch gekennzeichnet, daß** der mindestens eine Bypass-Kanal (83/84, 83'/84') über eine am Kolben (3g) längsverschiebbar angeordnete Hülse (82) in Abhängigkeit von der Kolbengeschwindigkeit verschließbar ist.

5. Schwingungsdämpfer auf Basis elektrorheologischer und/oder magnetorheologischer Flüssigkeiten nach einem oder mehreren der vorhergehenden Patentansprüche, dadurch ge kennzeichnet, daß die Ein- und Auslaßbohrung des minde stens einen Bypass-Kanals (72) über ein in Abhängigkeit von der Kolbengeschwindigkeit gegenüber dem Kolben (3f) drehbeweglich gelagerte scheibenförmige Elemente (74, 74') verschließbar sind.

## Claims

1. A vibration damper based on electro-rheological and/or magneto-rheological fluids comprising a cylindrical housing, an axially displaceable piston which is connected to a piston rod and sub-divides the cylindrical housing into two pressure-medium chambers, wherein the pressure-medium chambers are filled with an electro-rheological and/or a magneto-rheological fluid, and wherein there are provided fluid passage channels which interconnect the pressure-medium chambers, these channels being divided up into a flow channel and at least one bypass channel, and wherein a fluid passage channel is adapted to have an electric and/or magnetic field applied thereto, **characterised in that** the flow channel is electrically controllable and is arranged in the form of an axially extending spiral-shaped gap between the cylindrical housing (2) and the piston (3b, 3e, 3f, 3g), and **in that** said at least one bypass channel (34, 62, 72, 83, 83,' 84, 84,' ) exhibits a flow resistance whose value is definitely defined in dependence on the speed of the piston.

2. A vibration damper based on electro-rheological and/or magneto-rheological fluids in accordance with Claim 1, **characterised in that** said at least one bypass channel (34, 62, 83, 83') has a different geometrical shape at the fluid inlet and fluid outlet openings thereof in the compression and expansion directions of the stroke.

3. A vibration damper based on electro-rheological and/or magneto-rheological fluids in accordance with Claim 1, **characterised in that** the fluid inlet and/or fluid outlet opening of said at least one bypass channel (34) is adapted to be closed by a seat valve (36, 36') in dependence on the speed of the piston.

4. A vibration damper based on electro-rheological and/or magneto-rheological fluids in accordance with Claim 1, **characterised in that** said at least one bypass channel (83/84, 83'/84') is adapted to be closed by a sleeve (82) that is longitudinally displaceable on the piston (3g) in dependence on the speed of the piston.

5. A vibration damper based on electro-rheological and/or magneto-rheological fluids in accordance with any one or more of the preceding Claims, **characterised in that** the inlet and outlet borings of said at least one bypass channel (72) are adapted to be closed by a [sic] disc-shaped elements (74, 74') which are mounted such as to be rotatable with respect to the piston (3f) in dependence on the speed of the piston.

## Revendications

1. Amortisseur d'oscillations sur la base de liquides électrorhéologiques et/ou magnétorhéologiques comportant un boîtier de cylindre, un piston coulissant axialement divisant le boîtier de cylindre en deux chambres de fluide sous pression et en liaison avec une tige de piston, les chambres de fluide sous pression étant remplies d'un liquide électrorhéologique et/ou magnétorhéologique, et des canaux de passage de fluide, reliant les chambres de fluide sous pression, étant prévus, ceux-ci étant divisés en un canal d'écoulement et au moins un canal de dérivation, et un canal de passage de fluide pouvant être soumis à un champ électrique et/ou magnétique, **caractérisé en ce que** le canal d'écoulement est disposé en tant que fente en forme de spirale s'étendant axialement entre le boîtier de cylindre (2) et le piston (3b, 3e, 3e, 3g) et conçu de manière à pouvoir être commandé électriquement, et le ou les canaux de dérivation (34, 62, 72, 83, 83', 84, 84') présentent une résistance à l'écoulement prédéfinie de manière fixe en fonction de la vitesse du piston.

2. Amortisseur d'oscillations sur la base de liquides électrorhéologiques et/ou magnétorhéologiques selon la revendication 1, **caractérisé en ce que** le ou les canaux de dérivation (34, 62, 83, 83') présentent respectivement à leur ouverture d'entrée ou de sortie du fluide une forme géométrique différente dans le sens de la course de traction et le sens de la course de compression.

3. Amortisseur d'oscillations sur la base de liquides électrorhéologiques et/ou magnétorhéologiques selon la revendication 1, **caractérisé en ce que** l'ouverture d'entrée ou de sortie du fluide du ou des canaux de dérivation (34) peut être fermée dans chaque cas par des clapets (36, 36') en fonction de la vitesse du piston.

4. Amortisseur d'oscillations sur la base de liquides électrorhéologiques et/ou magnétorhéologiques selon la revendication 1, **caractérisé en ce que** le ou les canaux de dérivation (83/84, 83'/84') peuvent être fermés en fonction de la vitesse du piston, par l'intermédiaire d'une douille (82) disposée de manière à pouvoir coulisser longitudinalement dans le piston (3g).

5. Amortisseur d'oscillations sur la base de liquides électrorhéologiques et/ou magnétorhéologiques selon une ou plusieurs des revendications précédentes, **caractérisé en ce que** le perçage d'entrée et le perçage de sortie du ou des canaux de dérivation (72) peuvent être fermés par l'intermédiaire d'éléments (74, 74') en forme de disque montés mobiles à rotation par rapport au piston (3f), en fonction de la vitesse du piston.
